# EUROPEAN PATENT SPECIFICATION

(11) **EP 2 708 508 B1**
(45) Date of publication and mention of the grant of the patent: **25.11.2015**
(21) Application number: 12782705.3
(22) Date of filing: 16.04.2012
(51) Int. Cl.: C01B 33/035

(54) **SILICON CORE WIRE HOLDER AND METHOD FOR MANUFACTURING POLYCRYSTALLINE SILICON**
SILICIUMKERN-DRAHTHALTER UND VERFAHREN ZUR HERSTELLUNG VON POLYKRISTALLINEM SILICIUM
SUPPORT POUR FIL FOURRÉ AU SILICIUM ET PROCÉDÉ DE PRODUCTION D'UN SILICIUM POLYCRISTALLIN

(30) Priority: 09.05.2011 JP 2011104183
(43) Date of publication of application: 19.03.2014
(73) Proprietor: Shin-Etsu Chemical Co., Ltd., Tokyo 100-0004 (JP)
(72) Inventor: NETSU, Shigeyoshi, Joetsu-shi Niigata 942-8601 (JP); KUROSAWA, Yasushi, Joetsu-shi Niigata 942-8601 (JP)
(74) Representative: Smaggasgale, Gillian Helen
(86) International application number: PCT/JP2012/002623
(87) International publication number: WO 2012/153465

(56) References cited:
- WO-A1-2010/115542
- WO-A1-2010/133386
- DE-A1-102009 015 196
- JP-A- 2011 084 419
- US-A1- 2010 229 796

## Description

### [Technical Field]

The present invention relates to a core wire holder used for manufacturing polycrystalline silicon and a polycrystalline silicon manufacturing method using the core wire holder.

### [Background Art]

A Siemens method is known as a method for manufacturing polycrystalline silicon which is used as a raw material of single crystalline silicon for manufacturing semiconductors or of silicon for manufacturing solar cells. The Siemens method is a method in which a source gas including chlorosilane is brought into contact with a heated silicon core wire, and thereby polycrystalline silicon is vapor-grown on a surface of the silicon core wire through a CVD (Chemical Vapor Deposition) process.

When polycrystalline silicon is to be vapor-grown by the Siemens method, two silicon core wires held in a vertical direction and one silicon core wire held in a horizontal direction are assembled into an inverted U-shape in a reactor of a vapor deposition device. Then, both ends of the assembled inverted U-shaped silicon core wire are fixed through a pair of core wire holders to a pair of metal electrodes disposed on a base plate. Such a configuration is, for example, disclosed in Japanese Patent Laid-Open No. 2010-235438 (Patent Literature 1).

The above-mentioned metal electrode passes through the base plate with an insulator interposed therebetween, and is connected to another metal electrode, or connected to a power source disposed outside the reactor, by wiring. In order to prevent deposition of polycrystalline silicon during vapor phase growth, the metal electrode, the base plate, and the reactor are cooled with a cooling medium. As a result, the core wire holder fixed to the metal electrode is also cooled by the metal electrodes.

A current is conducted from the metal electrode, and while the silicon core wire is being heated to a temperature in a range of 900°C~1200°C in a hydrogen atmosphere, a mixed gas of trichlorosilane and hydrogen, for example, is supplied as a source gas from a gas nozzle into the reactor. Silicon contained in the source gas is deposited (vapor-grown) as polycrystalline silicon on the silicon core wire, forming a polycrystalline silicon rod having a desired diameter in an inverted U-shape.

Conventionally, a problem has been recognized that falling of the polycrystalline silicon rod occurs during the process or after the process of vapor phase growth of such polycrystalline silicon. As a measure to prevent the falling, for example, Japanese Patent Laid-Open No. 2002-234720 (Patent Literature 2) has proposed to use a core wire holder which has a thermal conductivity of higher than 145 W/m.K and a thermal expansion coefficient matching a thermal expansion coefficient of silicon.

In a case where polycrystalline silicon is vapor-grown by the Siemens method, it is desirable for the purpose of improving the productivity to increase the growth rate by supplying the source gas at a high flow rate or at a high concentration from an initial stage of growth. However, supplying the source gas at a high flow rate or at a high concentration at the initial stage of growth is likely to cause the silicon core wire to fall.

The falling of the silicon core wire tends to occur at a stage where joint strength between the silicon core wire and the core wire holder is insufficient. This is considered to be attributable to the fact that, at the initial stage of the growth of polycrystalline silicon, the polycrystalline silicon grows non-uniformly on the silicon core wire near a silicon core wire holding part (joint part) of the core wire holder.

The core wire holder is typically made of graphite, and one end side (upper end side) thereof is formed with a cavity (hole part), which is opened so as to allow the silicon core wire to be inserted and held therein, and the other end side (lower end side) is fixed to the metal electrode. Then, the current which is supplied from the metal electrode to the lower end side of the core wire holder flows to an end on the upper end side of the core wire holder, where the resistance is low, and enters the silicon core wire near the opening part of the cavity.

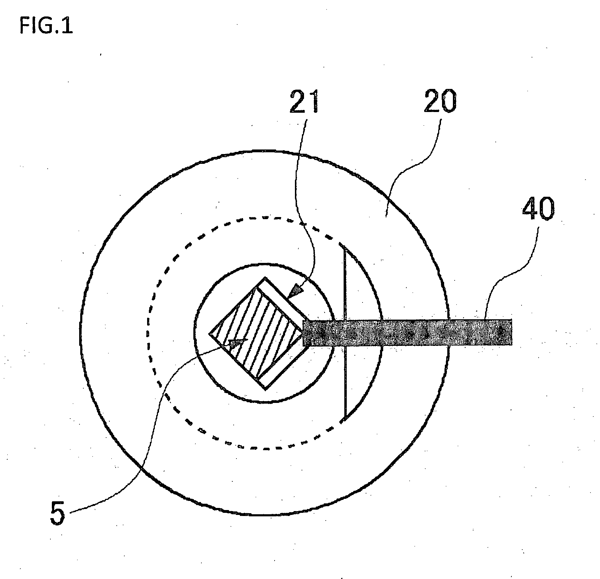

Figure 1 is a schematic cross-sectional view for explaining a state where the silicon core wire is held in the core wire holder in an embodiment of the prior art. Generally, a silicon core wire 5 has a square cross section, and in this case, a hole part 21 formed in a core wire holder 20 has also a square cross section. An end part of the silicon core wire is inserted into the hole part of the square cross section, and pressed against and fixed to two adjacent surfaces of four surfaces in an inner surface of the hole part 21 by a rod-like fastening member 40, or the like.

The current supplied from the metal electrode to the lower end side of the core wire holder 20 flows into the silicon core wire 5 from the above-mentioned two surfaces, which are in close contact with the end part of the silicon core wire. The current having flowed into the silicon core wire 5 flows the shortest distance upward in the silicon core wire 5. For this reason, heat generation is promoted in a portion of the silicon core wire 5 on a side of the two surfaces, which are in close contact with the silicon core wire 5, of the four surfaces in the inner surface of the hole part 21 of the core wire holder 20, compared with a portion of the silicon core wire 5 on a side of two surfaces which are not in close contact.

Since such non-uniformity in the heat generation conditions causes non-uniformity in deposition of polycrystalline silicon, at the initial stage of deposition reaction of polycrystalline silicon, non-uniformity in a shape of polycrystalline silicon becomes pronounced between the portion of the silicon core wire 5 on the side of the two surfaces in close contact with the inner surface of the hole part 21 of the core wire holder 20 and the portion of the silicon core wire 5 on the side of the two surfaces not in close contact. In addition, an inner area of the hole part 21 which is not in close contact with the silicon core wire 5 is susceptible to electric discharge, which is likely to cause damage to the silicon core wire 5.

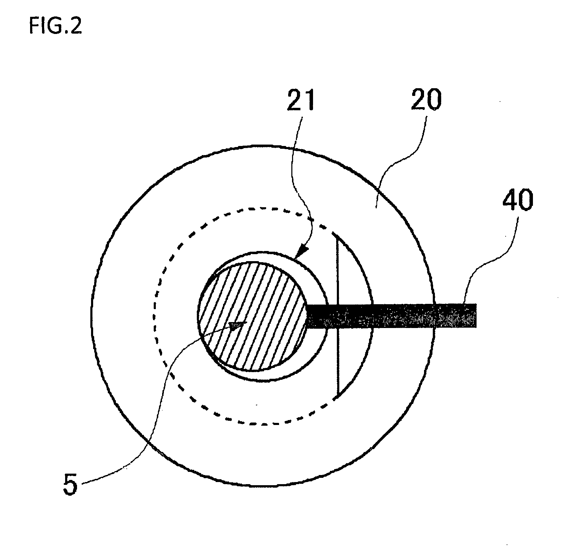

Figure 2 is a schematic cross-sectional view for explaining a state where the silicon core wire is held in the core wire holder in another embodiment of the prior art. As can be seen, also when the cross section of the silicon core wire 5 is circular and the cross section of the hole part 21 formed in the core wire holder 20 is circular, too, there is a portion not in close contact with the silicon core wire 5 inside the hole part 21. Thus, the same problem as mentioned above occurs.

Since the core wire holder 20 is cooled by the metal electrode, temperature of the silicon core wire 5 on the core wire holder 20 side is low compared with that in a straight body part of the silicon core wire 5. For this reason, especially at the initial stage of deposition reaction of polycrystalline silicon, a difference in diameter of the polycrystalline silicon becomes pronounced between the core wire holder 20 side where the deposition rate is relatively low and the straight body part where the deposition rate is relatively high.

Thus, especially at the initial stage of deposition reaction, compared with the straight body part, the diameter of polycrystalline silicon is pronouncedly thin near the silicon core wire holding part of the core wire holder, and the shape of the polycrystalline silicon is in a non-uniform state in the same area. When the flow rate or the concentration of the source gas is significantly increased in such a state, shaking of the silicon core wire occurs and moment is concentrated on the holding part due to the shaking. In addition, as mentioned above, the silicon core wire is likely to be damaged by electric discharge in the holding part. These factors contribute to the likelihood of falling of the silicon core wire.

Moreover, if the flow rate or the concentration of the source gas is increased, in order to maintain the temperature of the silicon core wire, an amount of heat equivalent to an amount of convective heat transfer of the source gas needs to be replenished, which requires rapidly increasing the supply current as well. Since such a rapid increase in the supply current means a rapid increase in a current density at each portion of the silicon core wire, partial melting or fusion of the silicon is induced in the portion of shape non-uniformity or the thin diameter portion. This also contributes to falling of the silicon core wire.

Under these circumstances, when polycrystalline silicon is to be vapor-grown, it has been conventionally necessary to restrict the flow rate and the concentration of the source gas until the polycrystalline silicon is deposited in the entire gap inside the hole part of the core wire holder which is not in contact with the silicon core wire, and the strength with which the silicon core wire is held in the core wire holder becomes sufficient. This has posed a problem that the deposition rate of polycrystalline silicon is unavoidably reduced while the source gas supply is under control.

In addition, WO 2010/115542 pamphlet (Patent Literature 3) discloses a holding part which is obtained by symmetrically dividing a part for holding a silicon core wire into three or more sections in order to suppress damage due to initial heating.

Further, WO 2010/133386 pamphlet (Patent Literature 4) proposes a method in which a gap is provided in a part of a core wire holder, and a lower end part of a silicon core wire to be held is fastened by a tapered cap mechanism so as to obtain good contact between the silicon core wire and the core wire holder.

However, according to the technology disclosed in Patent Literature 3 or Patent Literature 4, the work of holding the silicon core wire in the core wire holder is not necessarily easy, and the work is difficult to complete in a short time. For example, when the cap mechanism as disclosed in Patent Literature 4 is used, the work of holding the silicon core wire in the core wire holder is troublesome, and also it is difficult to adjust the fastening strength.

In addition, US 2010/0229796 discloses a manufacturing apparatus for the production of polycrystalline silicon comprising a holding member for the silicon core, which comprises a screw hole and the corresponding fixing screw, and which does not comprise a slit-like gap able to be fastened.

### [Citation List]

### [Patent Literature]

[Patent Literature 1]
   Japanese Patent Laid-Open No. 2010-235438
[Patent Literature 2]
   Japanese Patent Laid-Open No. 2002-234720
[Patent Literature 3]
   WO 2010/115542 pamphlet
[Patent Literature 4]
   WO 2010/133386 pamphlet

### [Summary of Invention]

### [Technical Problem]

The present invention has been made in view of the problems with the conventional technologies as described above, and an object thereof is to provide a polycrystalline silicon manufacturing technology which facilitates mounting of the silicon core wire to the core wire holder, and can reduce the time of growth rate inhibition at the initial stage of deposition reaction of polycrystalline silicon by shortening the time taken to hold the silicon core wire with sufficient strength in the core wire holder.

### [Solution to Problem]

In order to solve the above problems, according to a first embodiment of the present invention, there is provided a holder for holding a silicon core wire used during manufacturing of polycrystalline silicon by a Siemens method, including, in a main body of the holder: a core wire insert hole which is a hole part extending from an upper surface toward a lower surface side, and into which the silicon core wire is inserted; and a gap part which is a slit-like gap part located on a virtual plane including a central axis of the core wire insert hole, or a slit-like gap part located on a plane parallel to the virtual plane, and which extends from the core wire insert hole to reach an outer surface of the holder main body, and the holder is further provided with a fixing member which fixes the silicon core wire inserted inside the core wire insert hole by fastening the holder so as to narrow a gap of the gap part.

According to a second embodiment of the present invention, there is provided a holder for holding a silicon core wire used during manufacturing of polycrystalline silicon by a Siemens method, including, in a main body of the holder: a core wire insert hole which is a hole part extending from an upper surface toward a lower surface side, and into which the silicon core wire is inserted; a gap part which is a slit-like gap part located on a virtual plane including a central axis of the core wire insert hole, or a slit-like gap part located on a plane parallel to the virtual plane, and which extends from the core wire insert hole to reach an outer surface of the holder main body; and a fixing member insert hole which passes the central axis of the core wire insert hole and extends in a direction perpendicular to the virtual plane, and the holder is further provided with a fixing member, which is inserted from the fixing member insert hole so as to pass through a through-hole formed on a lower end side of the silicon core wire, and fixes the silicon core wire inserted inside the core wire insert hole by fastening the holder so as to narrow a gap of the gap part.

According to another embodiment of the silicon core wire holder of the present invention, the gap part may be provided as n (n is an integer equal to or greater than two) slit-like gap parts which are in an n-fold symmetrical relationship with respect to the central axis of the core wire insert hole and extend to reach the outer surface of the holder main body.

According to yet another embodiment of the silicon core wire holder of the present invention, a lower end of the slit-like gap part may be located at a level higher than a bottom surface of the holder main body, so that the bottom surface of the holder main body is not divided, or the lower end of the slit-like gap part may extend to reach the bottom surface of the holder main body, so that the bottom surface of the holder main body is divided.

The holder main body is preferably made of a material having a bending strength of 10 MPa or higher and a shore hardness of 20 or higher.

In a polycrystalline silicon manufacturing method according to the present invention, the silicon core wire holder according to the present invention is used, and when the silicon core wire is to be inserted into the core wire insert hole, a conductive sheet having a resistivity of 1500 µΩ-cm or lower is inserted between contact surfaces of the holder main body and the silicon core wire when the silicon core wire is to be inserted into the core wire insert hole, so as to reduce contact resistance between the contact surfaces of the holder main body and the silicon core wire at the time of energization of the silicon core wire.

### [Advantageous Effects of Invention]

Using the silicon core wire holder of the present invention allows the silicon core wire to be fixed substantially symmetrically and uniformly from both ends of the core wire insert hole. For this reason, a thermal environment including thermal conductivity and thermal radiation becomes uniform from the initial stage of the deposition reaction. Accordingly, the shape of the deposited polycrystalline silicon becomes symmetrical with respect to the axis.

Further, electric discharge, which has tended to occur when the silicon core wire holder having the conventional structure is used, is suppressed, and damage to the core wire holder or the silicon core wire at the initial stage of deposition reaction is also suppressed.

The present invention provides a polycrystalline silicon manufacturing technology which facilitates mounting of the silicon core wire to the core wire holder, and can reduce the time of growth rate inhibition at the initial stage of deposition reaction of polycrystalline silicon by shortening the time taken to hold the silicon core wire with sufficient strength in the core wire holder.

### [Brief Description of Drawings]

[Figure 1] Figure 1 is a schematic cross-sectional view for explaining a state where a silicon core wire is held in a core wire holder in an embodiment of the prior art.
[Figure 2] Figure 2 is a schematic cross-sectional view for explaining a state where the silicon core wire is held in the core wire holder in another embodiment of the prior art.
[Figure 3A] Figure 3A is a view (side view) for explaining an example configuration of a silicon core wire holder in a first embodiment according to the present invention.
[Figure 3B] Figure 3B is a view (front view) for explaining the example configuration of the silicon core wire holder in the first embodiment according to the present invention.
[Figure 3C] Figure 3C is a view (top view) for explaining the example configuration of the silicon core wire holder in the first embodiment according to the present invention.
[Figure 4] Figure 4 is a view (top view) for explaining another example configuration of the silicon core wire holder in the first embodiment according to the present invention.
[Figure 5] Figure 5 is a view (cross-sectional view) for explaining another example configuration of the silicon core wire holder in the first embodiment according to the present invention.
[Figure 6] Figure 6 is a view (side view) for explaining another example configuration of the silicon core wire holder in the first embodiment according to the present invention.
[Figure 7A] Figure 7A is a view (cross-sectional view) for explaining an example configuration of the silicon core wire holder in a second embodiment of the present invention.
[Figure 7B] Figure 7B is a view (top view) for explaining the example configuration of the silicon core wire holder in the second embodiment of the present invention.
[Figure 7C] Figure 7C is a view (side view) for explaining the example configuration of the silicon core wire holder in the second embodiment of the present invention.
[Figure 7D] Figure 7D is a view (top view) for explaining the example configuration of the silicon core wire holder in the second embodiment of the present invention.
[Figure 7E] Figure 7E is a view (side view) for explaining the example configuration of the silicon core wire holder in the second embodiment of the present invention.
[Figure 7F] Figure 7F is a view (top view) for explaining the example configuration of the silicon core wire holder in the second embodiment of the present invention.
[Figure 7G] Figure 7G is a view (side view) for explaining the example configuration of the silicon core wire holder in the second embodiment of the present invention.
[Figure 7H] Figure 7H is a view (top view) for explaining the example configuration of the silicon core wire holder in the second embodiment of the present invention.
[Figure 8] Figure 8 is a view (cross-sectional view) for explaining another example configuration of the silicon core wire holder in the second embodiment of the present invention.
[Figure 9] Figure 9 is a top view of the silicon core wire holder for explaining a state where a conductive sheet is used.
[Figure 10] Figure 10 is a view for explaining a shape of polycrystalline silicon in a case where a holder having a conventional structure is used.
[Figure 11] Figure 11 is a view for explaining a shape of polycrystalline silicon in a case where the holder according to the present invention is used.
[Figure 12] Figure 12 is a schematic cross-sectional view for explaining a vapor deposition device for polycrystalline silicon.

### [Description of Embodiments]

Hereinafter, a silicon core wire holder and a polycrystalline silicon manufacturing method of the present invention will be described with reference to the drawings.

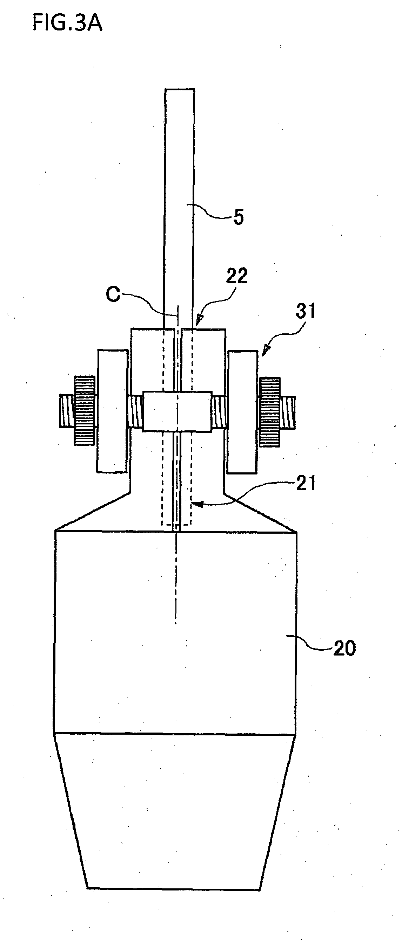

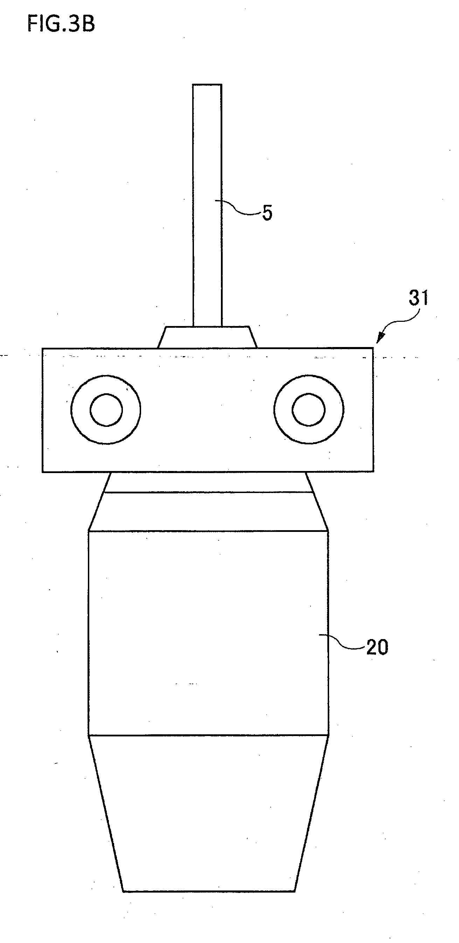

Figures 3A to 3C are views for explaining an example configuration of the silicon core wire holder of a first embodiment according to the present invention, and are a side view, a front view, and a top view, respectively.

This core wire holder 20 is a holder for holding a silicon core wire used during manufacturing of polycrystalline silicon by a Siemens method, and is formed with a hole part (core wire insert hole) 21 which has an opening part 22 on an upper surface of a main body of the holder 20 and extends toward a lower surface side, and a silicon core wire 5 is inserted to the core wire insert hole 21. In addition, a slit-like gap part 60 extending along a virtual plane P (located on the virtual plane) including a central axis C of the core wire insert hole 21 is formed, and this slit-like gap part 60 forms a gap part extending from the core wire insert hole 21 to reach an outer surface of the main body of the holder 20.

The silicon core wire 5 inserted in the core wire insert hole 21 is fixed by fastening an upper part of the main body of the holder 20 from sides with a pinch-cock-type fixing member 31 having plate-like pressing members 31 c, and thereby fastening the holder so as to narrow a gap of the gap part 60.

In the configurations shown in Figures 3A to 3C, the slit-like gap part 60 is provided at two places, that is, provided as two slit-like gap parts which are in two-fold symmetrical (360°/180°-fold symmetrical) relationship with respect to the central axis C of the core wire insert hole 21, and which extend to reach outer surfaces S1 and S2 of the holder main body 20.

However, the present invention is not limited to this embodiment, and only one slit-like gap part may be provided in another embodiment. Conversely, there may be provided n (n is an integer equal to or greater than three) slit-like gap parts, which are in an at least three-fold symmetrical relationship with respect to the central axis C of the core wire insert hole 21, and which extend to reach the outer surface of the holder main body 20.

Further, the above-described gap part does not have to be a single slit-like gap part, and a pair of multiple slit-like gap parts can also be considered as the gap part. In this case, the number of the slit-like gap parts becomes 2m (m is an integer equal to or greater than two) also in a case where the two-fold symmetrical gap parts are provided. For example, if the gap part is constituted of the pair of two slit-like gap parts, two (two pairs of) such gap parts are formed, and in total four slit-like gap parts are provided.

Here, fastening for narrowing the gap part 60 is not limited to the fastening by the pinch-cock-type fixing member 31 as exemplified in Figures 3A to 3C.

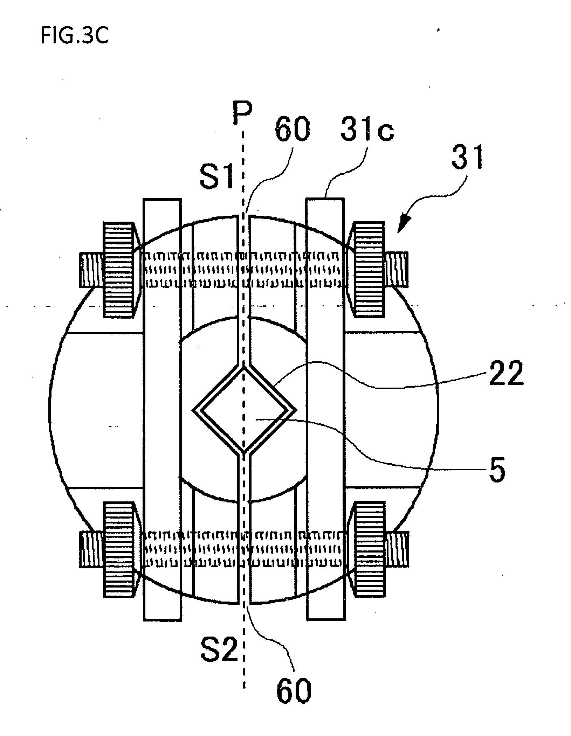

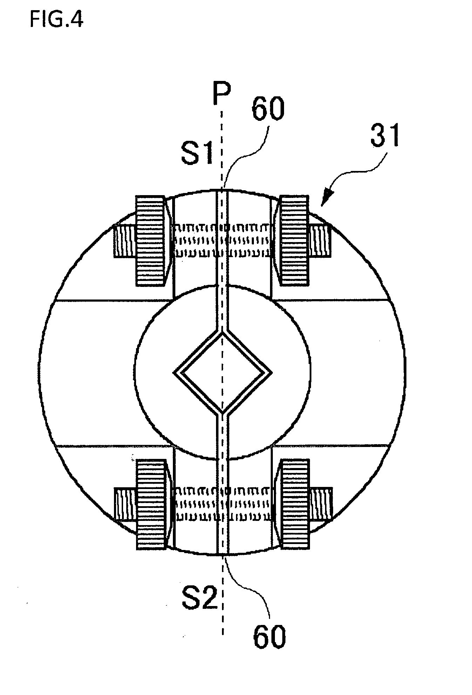

For example, as exemplified in the top view of Figure 4, instead of using the plate-like member 31 c shown in Figure 3C, a portion which acts in a similar manner to this may be formed on the upper part of the main body of the holder 20. Then, the fixing member 31 may be used which has a configuration such that a bolt-like member (fixing shaft) is passed through a hole part (fixing member insert hole) provided in the portion and fastened with a nut.

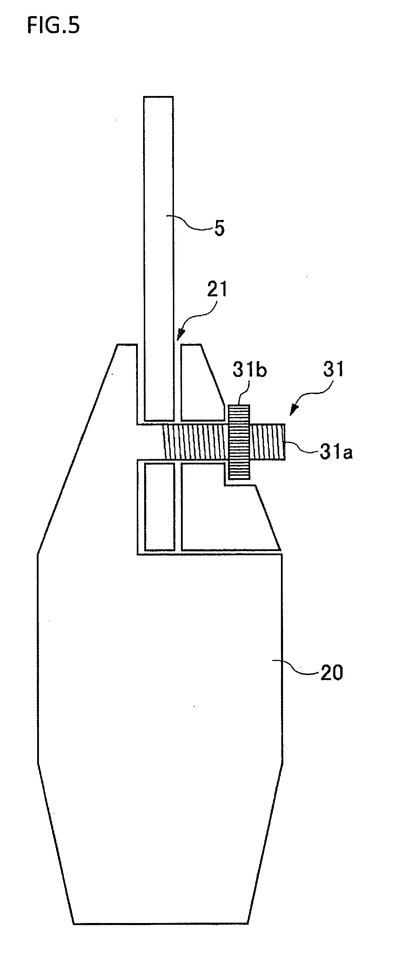

In addition, for example, as exemplified in the cross-sectional view of Figure 5, a protruding part 31 a, which is one of the fixing member 31, may be male-threaded in the holder main body 20. Then, the silicon core wire 5 may be fixed by fastening the holder so as to narrow the gap of the gap part 60 by a combination of the protruding part 31 a and a nut-like member 31 b, which is the other of the fixing member 31.

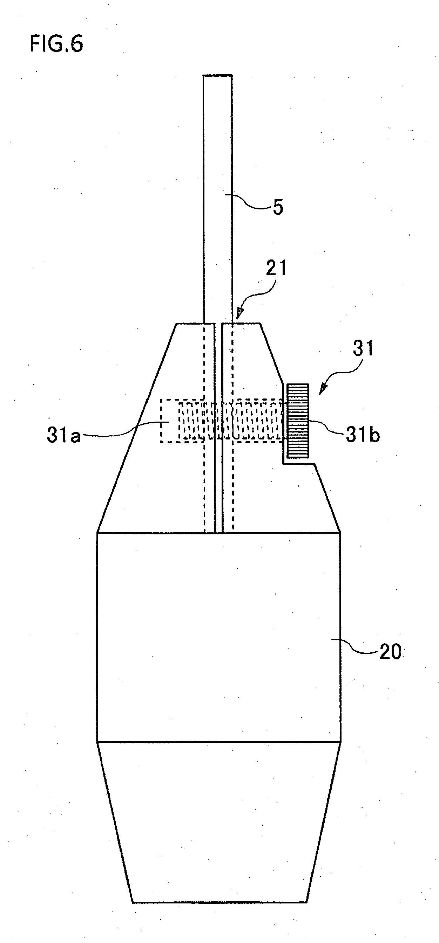

Further, as exemplified in the side view of Figure 6, a recessed part 31 a as one of the fixing member 31 may be formed in the holder main body 20 with its inner surface female-threaded. Then, the silicon core wire 5 may be fixed by fastening the holder so as to narrow the gap of the gap part 60 by a combination of the recessed part 31 a and the bolt-like member 31 b, which is the other of the fixing member 31. The work efficiency of mounting the silicon core wire 5 is higher than in the embodiment shown in Figure 6.

In a case where the fixing member 31 is a bolt/nut type, the fixing member having one or two female threaded part(s) with respect to one male threaded part may be used, but according to a comparison by the present inventors, the latter can fasten more securely.

In the embodiments illustrated so far, the lower end (terminal) of the slit-like gap part 60 is located at a level higher than the bottom surface of the holder main body 20, so that the bottom surface of the holder main body 20 is not divided. However, in another embodiment, the lower end of the gap part 60 may reach the bottom surface of the holder main body 20, so that the bottom surface of the holder main body 20 is divided.

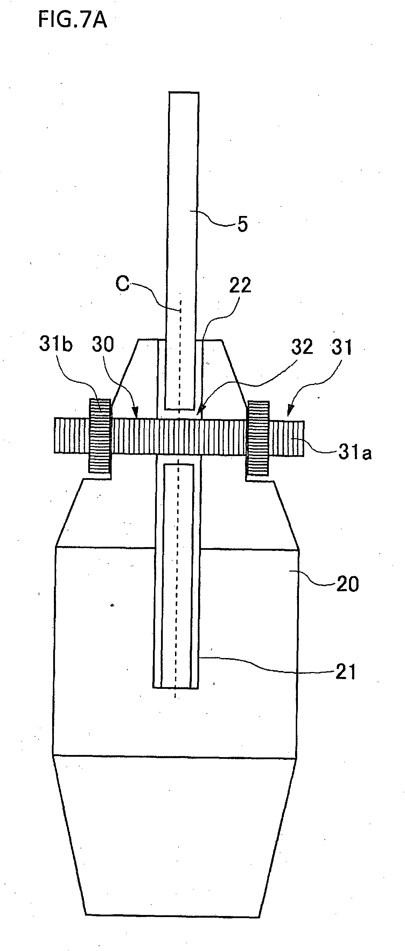

Figures 7A and 7B are views for explaining an example configuration of a silicon core wire holder in a second embodiment according to the present invention, and are a cross-sectional view and a top view, respectively.

This core wire holder 20 is a holder for holding a silicon core wire used during manufacturing of polycrystalline silicon by a Siemens method, and is formed with a hole part (core wire insert hole) 21 which has an opening part 22 on an upper surface of a main body of the holder 20 and extends toward a lower surface side, and a silicon core wire 5 is inserted into the core wire insert hole 21. In addition, a slit-like gap part 60 extending along a virtual plane P including a central axis C of the core wire insert hole 21 is formed, and this slit-like gap part 60 is a gap part which extends from the core wire insert hole 21 to reach an outer surface of the main body of the holder 20.

The holder main body 20 is further provided with an insert hole 30 for a fixing member 31 which passes the central axis C of the core wire insert hole 21 and extends in a direction perpendicular to the virtual plane P. In addition, a lower end side of the silicon core wire 5 is also formed with a through-hole 32. The fixing member 31 inserted from the insert hole 30 for the fixing member passes through the through-hole 32, and the holder is fastened so as to narrow the gap of the gap part 60, and thereby the silicon core wire 5 inserted inside the core wire insert hole 21 is fixed.

In the configurations shown in Figures 7A and 7B, the slit-like gap part 60 is provided at two places, that is, provided as two slit-like gap parts which are in two-fold symmetrical (360°/180°-fold symmetrical) relationship with respect to the central axis C of the core wire insert hole 21, and which extend to reach the outer surfaces S1 and S2 of the holder main body 20.

However, as already mentioned, the present invention is not limited to this embodiment, and only one slit-like gap part may be provided in another embodiment. Conversely, there may be provided n (n is an integer equal to or greater than three) slit-like gap parts, which are in an at least three-fold symmetrical relationship with respect to the central axis C of the core wire insert hole 21, and which extend to reach the outer surface of the holder main body 20.

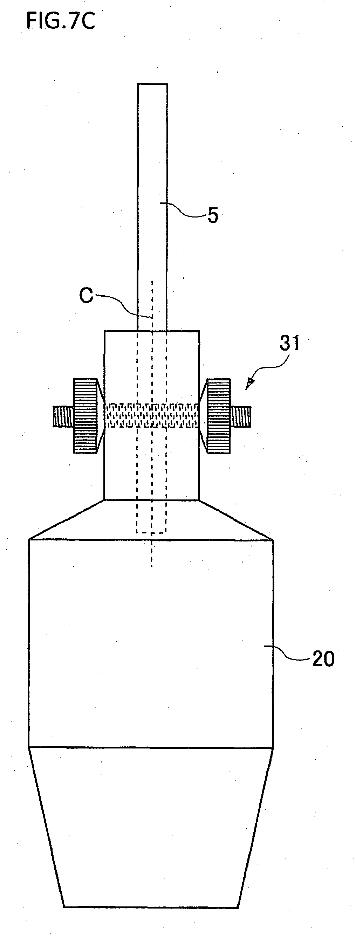

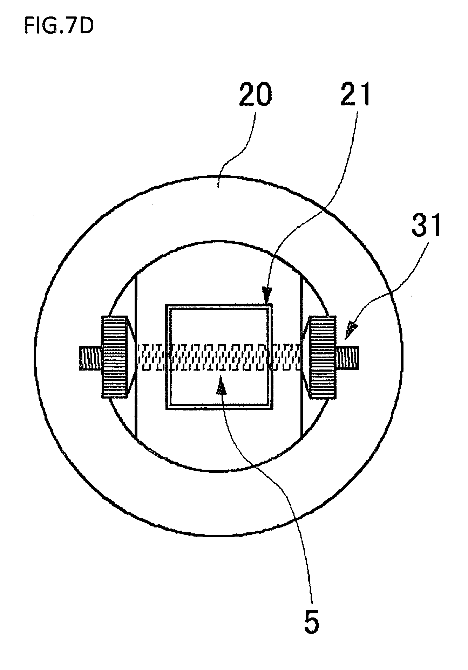

As shown in Figures 7C and 7D, instead of providing the slit-like gap part 60, the gap between the core wire insert hole 21 and the silicon core wire 5 may be adapted so that good contact is created between the holder main body 20 and the silicon core wire 5 by using deflection of the holder main body 20 when fastened by the fixing member 31.

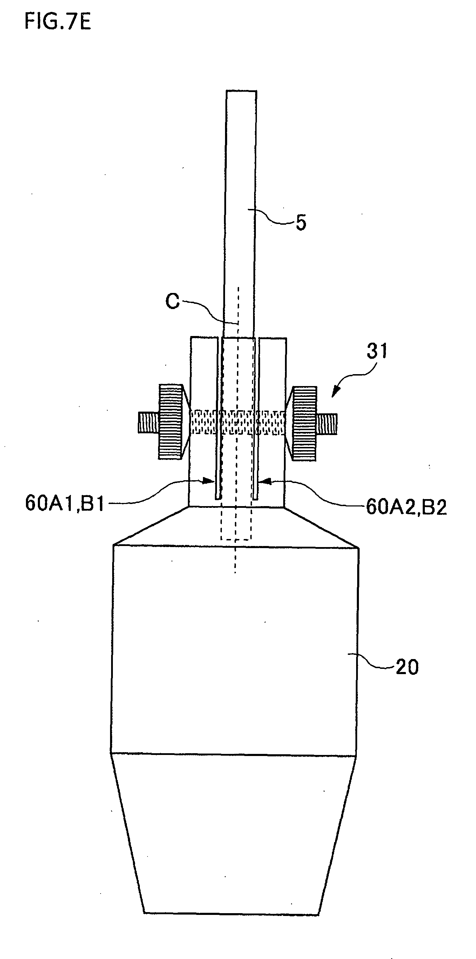

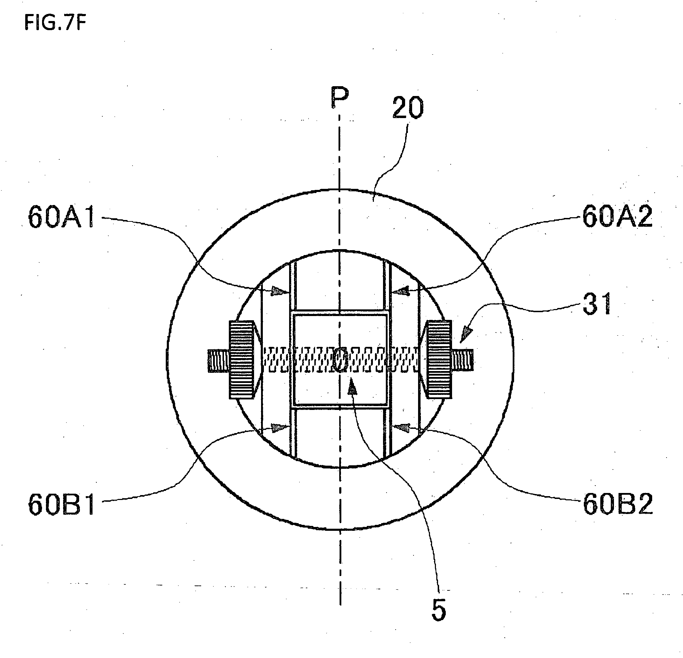

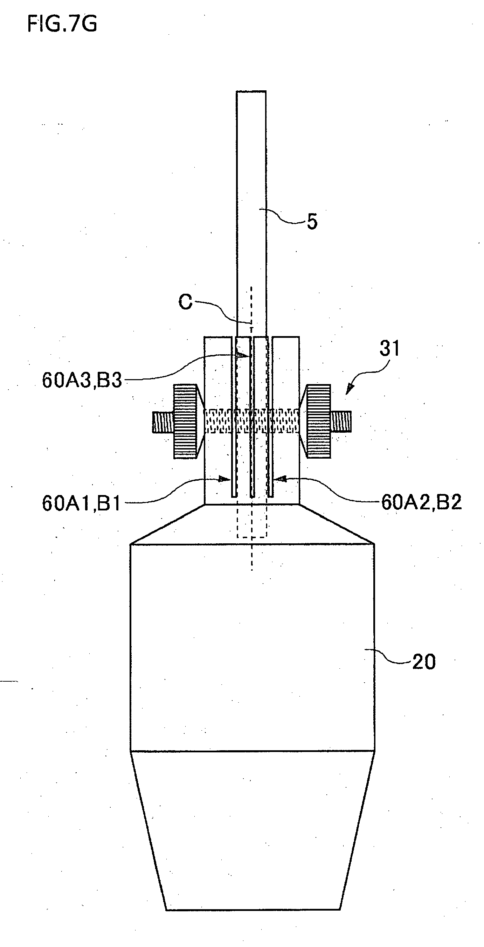

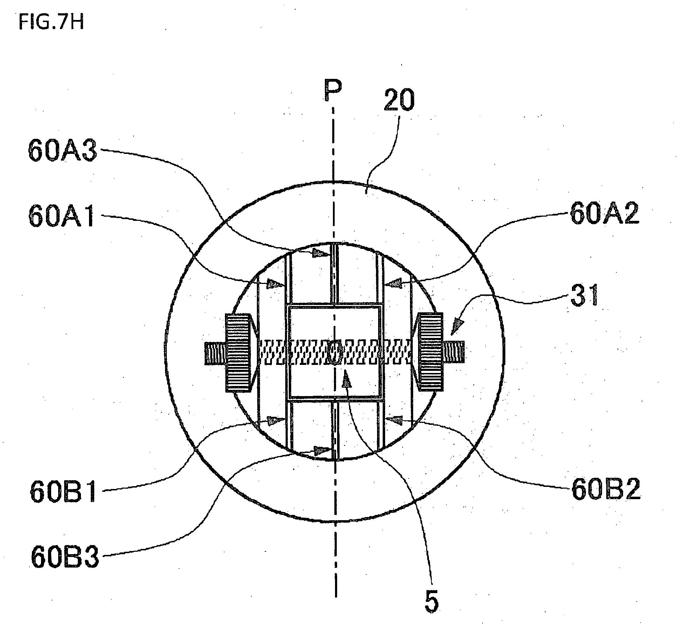

Further, as shown in Figures 7E and 7F, the pair of two slit-like gap parts (60A: 60A1 and 60A2, 60B: 60B1 and 60B2) may also be considered as the gap part and this gap part (60A and 60B) may be arranged in two-fold symmetry, or as shown in Figures 7G and 7H, the pair of three slit-like gap parts (60A: 60A1 to 60A3, 60B: 60B1 to 60B3) may be ideated as the gap part and this gap part (60A and 60B) may be arranged in two-fold symmetry.

In other words, the pair of m (m is an integer equal to or greater than two) slit-like gap parts may be considered as the gap part, and this gap part may be arranged in two-fold symmetry. In this case, the number of the slit-like gap parts is 2m in total.

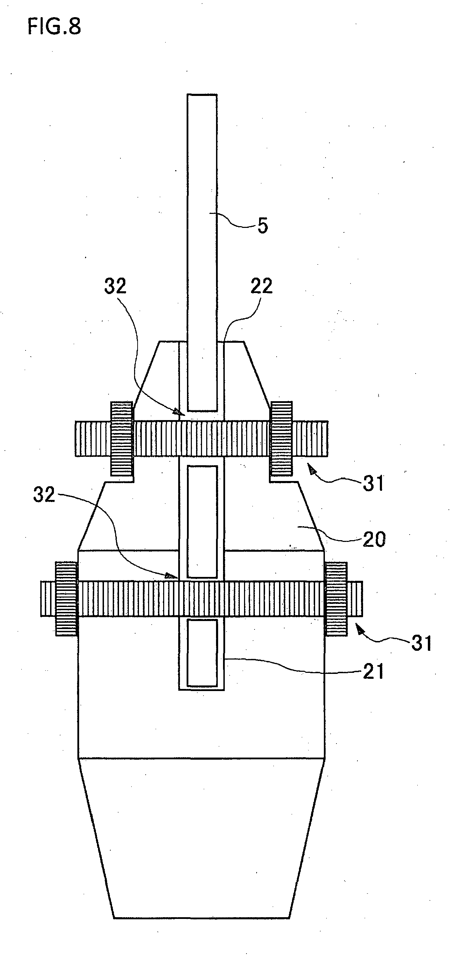

Further, a number of the fixing member 31 does not have to be one (or one pair), and for example, as shown in the cross-sectional view of Figure 8, a configuration with multiple fixing members 31 may be adopted. In this respect, the present embodiment is similar to the first embodiment described above, and since it has been already described in the first embodiment that there are many variations in the embodiment of the fixing member 31, a repeated description will be omitted.

In the silicon core wire holder of the present invention, a fastening force in a direction in which the gap of the gap part 60 is narrowed is generally symmetrical with respect to the silicon core wire 5 inserted inside the core wire insert hole 21, and the fastening force has no asymmetric property as in the conventional method.

It is preferable that a material having a bending strength of 10 MPa or higher and a shore hardness of 20 or higher is used for the main body 20 of the silicon core wire holder. Specifically, a carbon material obtained by heat-treating a carbon material having a low degree of crystallinity at a temperature around 3000°C to increase the crystallinity is preferable. Such information on strength of materials is readily available from catalog information, etc.

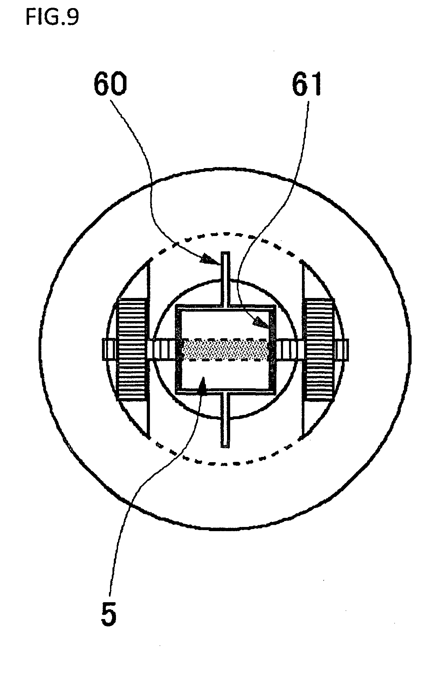

In addition, as shown in Figure 9, when the silicon core wire 5 is to be inserted into the core wire insert hole 21, a conductive sheet 61 having a resistivity of 1500 µΩ-cm or lower is preferably inserted between the contact surfaces of the holder main body 20 and the silicon core wire 5 so as to reduce the contact resistance by increasing a contact area at a micro-level in the contact surfaces between the holder main body 20 and the silicon core wire 5 at the time of energization of the silicon core wire 5. Examples of this conductive sheet 61 include one made of, besides graphite, a composite material such as aluminum-carbon fiber or aluminum-silicon carbide, or metal such as tungsten carbide. The conductive sheet 61 is, for example, 0.2 to 2 mm thick.

The following is a description on a polycrystalline silicon manufacturing procedure using the silicon core wire holder according to the second embodiment of the present invention, which is exemplified in Figures 7A and 7B.

For example, the holder main body 20 can be a carbon electrode made of graphite. In the example shown in Figures 7A and 7B, one end side is formed into a truncated cone shape with a slope surface, the opening part 22 is provided in the end part, and the hole part (core wire insert hole) 21 is formed to allow the silicon core wire 5 to be inserted and held therein.

Here, a cross-sectional shape of the silicon core wire 5 and a cross-sectional shape of the core wire insert hole 21 do not have to be rectangular, but either of them may be circular, triangular, pentagonal, or the like. However, when the cross sectional shapes are rectangular, it is easy to securely obtain a large contact area when the holder is fastened by the fixing member 31.

Polycrystalline silicon is vapor-grown on a surface of the silicon core wire 5 by the Siemens method, and a polycrystalline silicon rod is manufactured. As described later, the other end side of the core wire holder 20 serves as a metal electrode for conducting current to the silicon core wire 5, or a contact part with an adapter which is provided between the metal electrode and the core wire holder, and the core wire holder 20 is fixed to the metal electrode 2, through the adapter, if the adapter is available.

An insert hole 30 for the fixing member 31 which passes through the core wire holder is provided in the slope surface of the truncated cone shape near the opening part 22. In addition, a through-hole 32 is provided in the silicon core wire 5 to be inserted into the core wire insert hole 21, at the same level as the insert hole 30 provided in the holder main body 20.

A bolt-shaped fixing shaft 31 a, which is one of the fixing member 31, is passed through the insert hole 30 provided in the holder main body 20 and the through-hole 32 provided in the silicon core wire 5, and fixed from both sides by the nut 31 b which is the other of the fixing member 31.

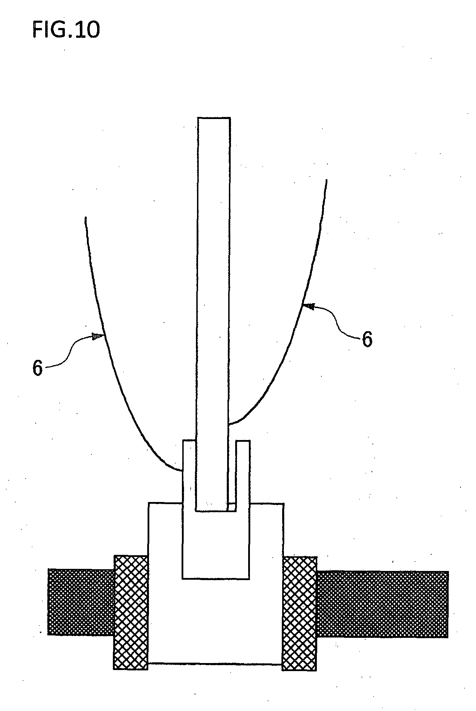

As has been explained using Figures 1 and 2, in the embodiment of the prior art, in which the hole part for passing through the fixing shaft 31 a common for the core wire holder main body 20 and the silicon core wire 5 is not provided, the contact state between the core wire insert hole 21 provided in the core wire holder 20 and the silicon core wire 5 inserted in the core wire insert hole 21 becomes pronouncedly asymmetrical with respect to the central axis of the silicon core wire 5. If current is conducted in this state, temperature of the silicon core wire 5 becomes also pronouncedly asymmetrical with respect to the central axis, which causes the shape of deposited polycrystalline silicon 6 to become non-uniform as shown in Fig. 10.

By contrast, in a case where the silicon core wire holder of the present invention is used, since the silicon core wire 5 can be positioned at the center of the core wire insert hole 21, the contact state between the core wire insert hole 21 and the silicon core wire 5 inserted in the core wire insert hole 21 can be made substantially symmetrical with respect to the central axis of the silicon core wire 5.

If current is conducted in this state, the temperature of the silicon core wire 5 becomes also substantially symmetrical with respect to the central axis, which causes the shape of the deposited polycrystalline silicon 6 to become uniform as shown in Figure 11.

Further, as has been explained using Figure 9, when the silicon core wire 5 is to be inserted into the core wire insert hole 21, in a case where the conductive sheet having a resistivity of 1500 µΩ·cm or lower is inserted between the contact surfaces of the holder main body 20 and the silicon core wire 5, not only is the fixing between the holder main body 20 and the silicon core wire 5 more secure, but also the shape uniformity of polycrystalline silicon is further enhanced at the initial stage of the deposition reaction due to the reduced contact resistance.

Thus, when the silicon core wire holder according to the present invention is used, not only can the silicon core wire 5 be strongly held in the core wire holder 20 so as to be prevented from falling, but also the time of growth rate inhibition at the initial stage of deposition reaction of polycrystalline silicon is shortened, so that the productivity is enhanced.

A study by the present inventors suggests that, in order to obtain a good contact state between the core wire holder 20 and the silicon core wire 5, there should be a gap of preferably 0.3 mm or less, in a state before the holder is fastened by the fixing member 31, between the silicon core wire 5 and the inner surface of the core wire insert hole 21 when the silicon core wire 5 is inserted into the core wire insert hole 21 of the core wire holder 20.

If the gap between the silicon core wire 5 and the inner surface of the core wire insert hole 21 exceeds 0.3 mm, crack, etc. is likely to occur at a fastened part of the holder main body 20, upon fastening of the holder by the fixing member 31. In order to avoid such an inconvenience, it is necessary that the holder main body 20 has high strength. Thus, a member having a shore hardness of 20 or higher and a bending strength of 10 MPa or higher is desirable as a member of the holder main body 20.

In a case where the fixing member 31 of a bolt/nut type is adopted, it is preferable that a fastening torque is controlled to be constant.

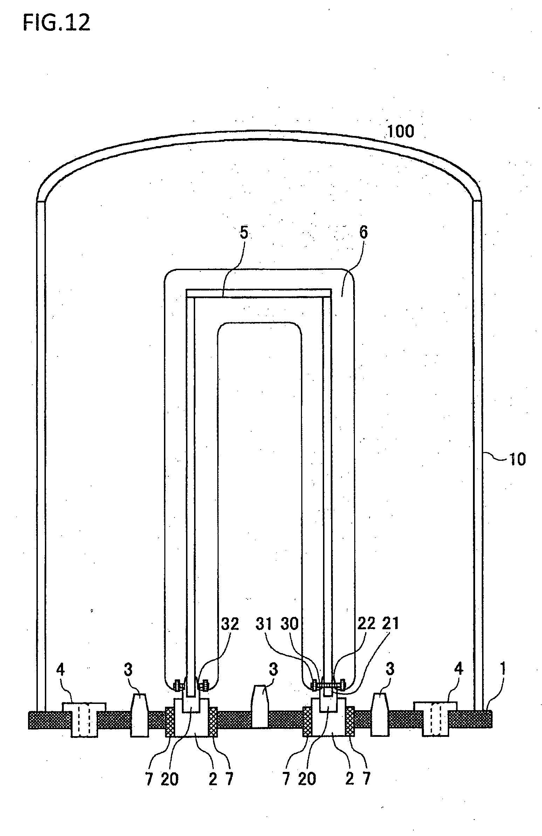

Figure 12 is a schematic explanatory view showing one example of a vapor deposition device 100 in which the present invention is used. The vapor deposition device 100 is a device for growing the polycrystalline silicon 6 by vapor deposition on the surface of the silicon core wire 5 by the Siemens method, and is generally constituted of a base plate 1 and a reactor 10. Here, the core wire holder 20 is a carbon electrode made of graphite.

On the base plate 1, metal electrodes 2 for supplying a current to the silicon core wire 5, gas nozzles 3 for supplying a process gas such as nitrogen gas, hydrogen gas, or trichlorosilane gas, and exhaust ports 4 for exhausting exhaust gas are disposed.

The metal electrode 2 passes through the base plate 1 with an insulator 7 interposed therebetween, and is connected to another metal electrode, or connected to a power source disposed outside the reactor, through wiring. The metal electrodes 2, the base plate 1, and the reactor 10 are cooled with a cooling medium.

As shown in Figure 12, when the polycrystalline silicon 6 is to be vapor-grown, two silicon core wires 5 held in a vertical direction and one silicon core wire 5 held in a horizontal direction are assembled into an inverted U-shape inside the reactor 10, and both ends of the assembled inverted U-shaped silicon core wire 5 are fixed through the pair of core wire holders 20 to the pair of metal electrodes 2 disposed on the base plate 1.

The core wire holder 20 is made of graphite having a shore hardness of 20 or higher, a bending strength of 10 MPa or higher, and a heat conductivity of 145 W/m.K or lower. The one end side (upper end side) having the slope surface of the truncated cone shape is formed with a cavity (core wire insert hole) 21 opened so as to allow the silicon core wire 5 to be inserted and held therein, and the other end side (lower end side) is fixed to the metal electrode 2.

The thermal conductivity of 145 W/m·K or lower is specified as a result of the study by the present inventors. That is, the lower the thermal conductivity of the core wire holder 20 itself is, the smaller the amount of heat escaping toward the metal electrode 2 becomes, and the heat insulating effect plays a role to maintain the high temperature of the upper part of the core wire holder 20. If the high temperature at the upper part of the core wire holder 20 can be maintained, the high temperature at the lower part of the silicon core wire during energization can be maintained, so that an applied voltage can be reduced and damage during energization can be suppressed. In addition, the deposition rate of polycrystalline silicon at this part can also be increased at the initial stage of the reaction.

The silicon core wire 5, which is formed with the through-hole 32 aligned with the hole part (insert hole) 30, is inserted into the core wire insert hole 21 of the core wire holder 20 having the insert hole 30 in the slope surface of the truncated cone shape on the upper end side, and the silicon core wire 5 is fixed by the bolt 31a and the nut 31b. As described above, fastening of the nut 31 b is preferably torque-controlled.

The bolt 31 a may be a machine bolt type. In that case, the nut 31 b is fastened from only one side. Further, in a case where the bolt 31 a is a stud bolt type, the nut 31 b is fastened from both sides. The study by the present inventors suggests that the bolt 31 a is preferably a stud bolt type.

Next, the silicon core wire 5 is preheated using a heater (not shown) to a temperature of 250°C or higher, and the inside of the silicon core wire 5 is made just conductive enough to allow efficient current flow. Subsequently, the current is supplied from the metal electrode 2 through the core wire holder 20 to the silicon core wire 5, and thereby the silicon core wire 5 is heated to 900°C or higher.

According to the study on the present invention, it is preferable that a current of about 60 to 70A is applied at the time of ignition, and then, a current of about 100A is supplied so as to increase the core wire surface temperature to 900°C or higher before starting deposition reaction of polycrystalline silicon. Accordingly, after ignition, trichlorosilane gas along with hydrogen gas is supplied as a source gas at a low flow rate, while a current of about 100A is being supplied, and vapor phase growth is started. At this time, cross-sectional current density of the current flowing through the silicon core wire 5 which is fixed to the core wire holder 20 made of graphite is 0.13 A/mm² or higher and 4.9 A/mm² or lower.

When energization of the silicon core wire 5 is started and vapor phase growth of the polycrystalline silicon 6 is started, the upper end side of the core wire holder 20 is heated by being subjected to conductive heat and radiation heat from the silicon core wire 5 and the polycrystalline silicon 6. As described above, since in the present invention, the silicon core wire 5 and the core wire holder 20 contact with each other in a substantially axially symmetrical manner, the contact surfaces of the upper end side of the core wire holder 20 and the silicon core wire 5 are uniformly (axially symmetrically) heated, so that the polycrystalline silicon 6 is also uniformly deposited.

As described above, the uniformly deposited polycrystalline silicon makes the fixing of the silicon core wire 5 by the core wire holder 20 not only stronger but also free of anomalous stress due to the axially symmetrical shape of the polycrystalline silicon at that part.

In the conventional method, making the fixing of the silicon core wire 5 by the core wire holder 20 sufficiently strong requires that the diameter of a silicon rod reach as large as about 35 mm. By contrast, it has been found that when the silicon core wire holder of the present invention is used, the fixing can be made sufficiently strong at a point where the diameter of the silicon rod reaches about 15 mm.

After making the fixing of the silicon core wire 5 by the core wire holder 20 sufficiently strong, the polycrystalline silicon 6 is vapor-grown on the silicon core wire 5 in a temperature range of 900°C or higher to 1200°C or lower, while a current supply amount and a supply amount of hydrogen gas and trichlorosilane gas of the source gas are being further increased. Unreacted gas and by-product gas are exhausted from the exhaust port 4.

Then, after the polycrystalline silicon 6 has grown to a desired diameter (e.g., 120 mm), the source gas supply is stopped, temperature inside the reactor 10 is reduced, the hydrogen atmosphere inside the reactor is substituted with a nitrogen atmosphere, and the reactor 10 is opened to the atmosphere.

### [Examples]

### [Example 1]

The core wire holder 20 made of graphite with the upper end side formed into a truncated cone shape was used. The insert hole 30 for a 4 mm screw is formed, in the slope surface of the truncated cone shape at a position 10 mm away from the opening part 22 of the core wire insert hole 21, so as to extend toward the core wire insert hole 21, and the slit 60 is provided in a longitudinal direction in the opening part 22.

In addition, the silicon core wire 5 was used, in which the through-hole 32 is opened such that, when the silicon core wire 5 is inserted to the bottom of the core wire insert hole 21, the bolt 31 a, which is the common fixing shaft, passes through the insert hole 30 of the core wire holder and the through-hole 32 of the silicon core wire 5.

Further, the conductive sheet 61 having a specific resistance equivalent to that of the core wire holder 20 is inserted between contact surfaces of an inner surface of the core wire insert hole 21 and the silicon core wire 5, and fixed by the bolt 31 a and the nut 31 b.

Here, as the bolt 31 a which is the common fixing shaft, a 3.7 mm stud type screw made of carbon graphite was used, and it was fastened from both sides using the nut 31b.

When trichlorosilane gas along with hydrogen gas was supplied as a source gas, while the silicon core wire 5 was being heated to 1063°C, the upper end side of the core wire holder 20 was uniformly covered by deposition of the polycrystalline silicon 6 in a ten-hour period of growth rate inhibition after the start of vapor phase growth. At that time, the diameter of the polycrystalline silicon 6 was 14 mm and the current value was 210A. From this point, the supply gas amount started to be increased, and then, the current value was increased with the growth in the diameter of the polycrystalline silicon rod. In 63 hours, polycrystalline silicon having a diameter of 121 mm was obtained.

### [Example 2]

The core wire holder 20 made of graphite which is the same type as in Example 1 was used. Trichlorosilane gas along with hydrogen gas was supplied as a source gas while the silicon core wire 5 held in the core wire holder 20 was being heated to 1050°C. In a 12-hour period of growth rate inhibition after the start of vapor phase growth, a first end side of the core wire holder 20 was covered uniformly by deposition of the polycrystalline silicon 6. At that time, the diameter of the polycrystalline silicon 6 was 13 mm and the current value was 195A. From this point, the supply gas amount started to be increased, and then, the current value was increased with the growth in the diameter of the polycrystalline silicon rod. In 62 hours, polycrystalline silicon having a diameter of 119 mm was obtained.

### [Comparative Example 1]

The core wire holder 20 made of graphite was used, which is formed of the same material as in Example 1 and is the core wire holder 20 of the conventional type having the structure shown in Figure 1. Trichlorosilane gas along with hydrogen gas was supplied as a source gas while the silicon core wire 5 held in the core wire holder 20 was being heated to 1055°C. In a 16-hour period of growth rate inhibition after the start of vapor phase growth, the diameter of polycrystalline silicon 6 was 18 mm and the current value was 240A. As with Examples 1 and 2, the current value was increased after the supply gas amount was increased. However, already at this point, the shape of the deposited polycrystalline silicon 6 on the upper end side of the core wire holder 20 was non-uniform as shown in Figure 10. Although after that the vapor phase growth was continued at a current value of 514A, the polycrystalline silicon rod fell at a point when the diameter of the polycrystalline silicon 6 reached 36 mm, making it impossible to continue the reaction.

### [Comparative Example 2]

Deposition of polycrystalline silicon was performed by controlling the initial conditions for reaction in a similar manner as in Comparative Example 1. In 33 hours, at a point when the diameter of the polycrystalline silicon 6 reached 35 mm, deposition of the polycrystalline silicon 6 on the upper end side of the core wire holder 20 became uniform. After that, the supply gas amount started to be increased, and the current value started to be increased. In 87-hour deposition, a polycrystalline silicon rod having a diameter of 121 mm was obtained.

As described above, according to the present invention, since polycrystalline silicon can be uniformly deposited near the upper end of the core wire holder, falling due to local growth of polycrystalline silicon is also less likely to occur. Thus, the timing of starting to increase the supply gas amount can be significantly advanced, and thereby the productivity can be greatly enhanced.

### [Industrial Applicability]

The present invention provides a polycrystalline silicon manufacturing technology which facilitates mounting of a silicon core wire to a core wire holder, can reduce the time taken to hold the silicon core wire with sufficient strength in the core wire holder, and can shorten the time of growth rate inhibition at the initial stage of deposition reaction of polycrystalline silicon, while preventing the silicon core wire from falling.

### [Reference Signs List]

- 1: base plate
- 2: metal electrode
- 3: gas nozzle
- 4: exhaust port
- 5: silicon core wire
- 6: polycrystalline silicon
- 7: insulator
- 10: reactor
- 20: core wire holder
- 21: core wire insert hole
- 22: opening part
- 30: fixing member insert hole
- 31: fixing member
- 32: through-hole
- 40: rod-like fastening member
- 60: slit-like gap part
- 61: conductive sheet
- 100: vapor deposition device

## Claims

1. A holder for holding a silicon core wire used during manufacturing of polycrystalline silicon by a Siemens method, comprising, in a main body thereof:
a core wire insert hole which is a hole part extending from an upper surface toward a lower surface side, and into which the silicon core wire is inserted; and
a gap part which is a slit-like gap part located on a virtual plane including a central axis of the core wire insert hole, or a slit-like gap part located on a plane parallel to the virtual plane, and which extends from the core wire insert hole to reach an outer surface of the holder main body; wherein
the holder is provided with a fixing member, which fixes the silicon core wire inserted in the core wire insert hole by fastening the holder so as to narrow a gap of the gap part.

2. A holder for holding a silicon core wire which is used during manufacturing of polycrystalline silicon by a Siemens method, comprising, in a main body thereof:
a core wire insert hole which is a hole part extending from an upper surface toward a lower surface side, and into which the silicon core wire is inserted;
a gap part which is a slit-like gap part located on a virtual plane including a central axis of the core wire insert hole, or a slit-like gap part located on a plane parallel to the virtual plane, and which extends from the core wire insert hole to reach an outer surface of the holder main body; and
a fixing member insert hole which passes the central axis of the core wire insert hole and extends in a direction perpendicular to the virtual plane; wherein
the holder is provided with a fixing member, which is inserted from the fixing member insert hole so as to pass through a through-hole provided on a lower end side of the silicon core wire, and fixes the silicon core wire inserted in the core wire insert hole by fastening the holder so as to narrow a gap of the gap part.

3. The holder for holding a silicon core wire according to claim 1 or 2, wherein
the gap part is provided as n (n is an integer equal to or greater than two) slit-like gap parts which are in an n-fold symmetrical relationship with respect to the central axis of the core wire insert hole, and extend to reach the outer surface of the holder main body.

4. The holder for holding a silicon core wire according to claim 1 or 2, wherein
a lower end of the slit-like gap part is located at a level higher than a bottom surface of the holder main body, so that the bottom surface of the holder main body is not divided.

5. The holder for holding a silicon core wire according to claim 1 or 2, wherein
a lower end of the slit-like gap part reaches a bottom surface of the holder main body, so that the bottom surface of the holder main body is divided.

6. The holder for holding a silicon core wire according to claim 1 or 2, wherein
the holder main body is made of a material having a bending strength of 10 MPa or higher and a shore hardness of 20 or higher.

7. A polycrystalline silicon manufacturing method using the holder for holding a silicon core wire according to claim 1 or 2, wherein
a conductive sheet having a resistivity of 1500 µΩ-cm or lower is inserted between contact surfaces of the holder main body and the silicon core wire when the silicon core wire is to be inserted into the core wire insert hole, so as to reduce contact resistance between the contact surfaces of the holder main body and the silicon core wire at the time of energization of the silicon core wire.

## Patentansprüche

1. Halter zum Halten eines Silizium-Kerndrahts, welcher bei der Herstellung von polykristallinem Silizium durch ein Siemens-Verfahren verwendet wird, umfassend, in einem Hauptkörper davon:
eine Kerndrahteinsatzöffnung, die ein Öffnungsteil ist, der sich von einer oberen Oberfläche zu einer unteren Oberflächenseite erstreckt, und in welchen der SiliziumKerndraht eingeführt wird; und
einen Spaltteil, der ein schlitzartiger Spaltteil ist, befindlich auf einer virtuellen Ebene, enthaltend eine Mittelachse der Kerndrahteinsatzöffnung, oder einen schlitzartigen Spaltteil befindlich auf einer Ebene parallel zu der virtuellen Ebene, und der sich von der Kerndrahteinsatzöffnung erstreckt, um eine äußere Oberfläche des Halterhauptkörpers zu erreichen; wobei
der Halter bereitgestellt wird mit einem Befestigungselement, welches den in die Kerndrahteinsatzöffnung eingeführten Silizium-Kerndraht fixiert indem der Halter derart festgemacht wird, dass der Spalt des Spaltteils verengt wird.

2. Halter zum Halten eines Silizium-Kerndrahts, welcher bei der Herstellung von polykristallinem Silizium durch ein Siemens-Verfahren verwendet wird, umfassend, in einem Hauptkörper davon:
eine Kerndrahteinsatzöffnung, die ein Öffnungsteil ist, der sich von einer oberen Oberfläche zu einer unteren Oberflächenseite erstreckt, und in welchen der SiliziumKerndraht eingeführt wird;
einen Spaltteil, der ein schlitzartiger Spaltteil ist, befindlich auf einer virtuellen Ebene, enthaltend eine Mittelachse der Kerndrahteinsatzöffnung, oder einen schlitzartigen Spaltteil befindlich auf einer Ebene parallel zu der virtuellen Ebene, und der sich von der Kerndrahteinsatzöffnung erstreckt, um eine äußere Oberfläche des Halterhauptkörpers zu erreichen; und
eine Einsatzöffnung des Befestigungselements, die durch die Mittelachse der Kerndrahteinsatzöffnung hindurchtritt und sich in eine Richtung senkrecht zu der virtuellen Ebene erstreckt;
wobei
der Halter mit einem Befestigungselement bereitgestellt wird, welches von der Einsatzöffnung des Befestigungselements eingesetzt wird, sodass es durch die Durchgangsbohrung hindurchtritt, bereitgestellt an einer Seite des unteren Endes des Silizium-Kerndrahtes, und den Silizium-Kerndraht eingesetzt in die Kerndrahteinsatzöffnung fixiert indem der Halter derart festgemacht wird, dass der Spalt des Spaltteils verengt wird.

3. Halter zum Halten eines Silizium-Kerndrahts nach Anspruch 1 oder 2,
wobei
der Spaltteil bereitgestellt wird als n (n ist eine ganze Zahl gleich oder größer als zwei) schlitzartige Spaltteile, die in einer n-fach symmetrischen Beziehung in Bezug auf die Mittelachse der Kerndrahteinsatzöffnung sich befinden und sich erstrecken um die äußere Oberfläche des Halterhauptkörpers zu erreichen.

4. Halter zum Halten eines Silizium-Kerndrahts nach Anspruch 1 oder 2,
wobei
ein unteres Ende der schlitzartigen Spaltteils sich auf einem Niveau befindet höher als eine Bodenfläche des befindet, so dass die Bodenfläche des Halter-Hauptkörpers nicht unterteilt ist.

5. Halter zum Halten eines Silizium-Kerndrahts nach Anspruch 1 oder 2,
wobei
ein unteres Ende der schlitzartigen Spaltteils eine Bodenfläche des Halter-Hauptkörpers erreicht, so dass die Bodenfläche des Halter-Hauptkörpers unterteilt ist.

6. Halter zum Halten eines Silizium-Kerndrahts nach Anspruch 1 oder 2,
wobei
der Halter-Hauptkörper aus einem Material mit einer Biegefestigkeit von 10 MPa oder mehr und einer Shore-Härte von 20 oder höher hergestellt ist.

7. Herstellungsverfahren für polykristallines Silizium mit dem Halter zum Halten eines Siliziumkerndrahts nach Anspruch 1 oder 2, wobei
eine leitende Folie mit einem spezifischen Widerstand von 1500 µΩ-cm oder weniger eingesetzt wird zwischen Kontaktflächen des Halter-Hauptkörpers und dem Siliziumkerndraht, wenn der Siliziumkerndraht eingeführt werden soll in die Kerndrahteinsatzöffnung, um Kontaktwiderstand zwischen den Kontaktflächen des Halter-Hauptkörpers und dem Siliziumkerndraht zum Zeitpunkt der Erregung des Siliziumkerndrahts zu reduzieren.

## Revendications

1. Support pour supporter un fil de noyau de silicium utilisé pendant la fabrication de silicium polycristallin par un procédé Siemens, comprenant, dans un corps principal de celui-ci :
un trou d'insertion de fil de noyau qui est une partie de trou s'étendant d'une surface supérieure vers un côté de surface inférieure, et dans lequel le fil de noyau de silicium est inséré ; et
une partie d'espace qui est une partie d'espace similaire à une fente située dans un plan virtuel comprenant un axe central du trou d'insertion de fil de noyau, ou une partie d'espace similaire à une fente située dans un plan parallèle au plan virtuel, et qui s'étend du trou d'insertion de fil de noyau pour atteindre une surface extérieure du corps principal de support ; dans lequel
le support est pourvu d'un élément de fixation, qui fixe le fil de noyau de silicium inséré dans le trou d'insertion de fil de noyau en fixant le support de manière à rétrécir un espace de la partie d'espace.

2. Support pour supporter un fil de noyau de silicium qui est utilisé pendant la fabrication de silicium polycristallin par un procédé Siemens, comprenant, dans un corps principal de celui-ci :
un trou d'insertion de fil de noyau qui est une partie de trou s'étendant d'une surface supérieure vers un côté de surface inférieure, et dans lequel le fil de noyau de silicium est inséré ;
une partie d'espace qui est une partie d'espace similaire à une fente située dans un plan virtuel comprenant un axe central du trou d'insertion de fil de noyau, ou une partie d'espace similaire à une fente située dans un plan parallèle au plan virtuel, et qui s'étend du trou d'insertion de fil de noyau pour atteindre une surface extérieure du corps principal de support ; et
un trou d'insertion d'élément de fixation qui passe par l'axe central du trou d'insertion de fil de noyau et s'étend dans une direction perpendiculaire au plan virtuel ; dans lequel
le support est pourvu d'un élément de fixation, qui est inséré à partir du trou d'insertion d'élément de fixation de manière à passer à travers un trou traversant prévu d'un côté d'extrémité inférieure du fil de noyau de silicium, et fixe le fil de noyau de silicium inséré dans le trou d'insertion de fil de noyau en fixant le support de manière à rétrécir un espace de la partie d'espace.

3. Support pour supporter un fil de noyau de silicium selon la revendication 1 ou 2, dans lequel
la partie d'espace est prévue en tant que n (n est un entier égal ou supérieur à deux) parties d'espace similaire à une fente qui sont dans une relation symétrique d'ordre n par rapport à l'axe central du trou d'insertion de fil de noyau, et s'étendent pour atteindre la surface extérieure du corps principal de support.

4. Support pour supporter un fil de noyau de silicium selon la revendication 1 ou 2, dans lequel
une extrémité inférieure de la partie d'espace similaire à une fente est située à un niveau plus élevé qu'une surface inférieure du corps principal de support, de sorte que la surface inférieure du corps principal de support n'est pas divisée.

5. Support pour supporter un fil de noyau de silicium selon la revendication 1 ou 2, dans lequel
une extrémité inférieure de la partie d'espace similaire à une fente atteint une surface inférieure du corps principal de support, de sorte que la surface inférieure du corps principal de support est divisée.

6. Support pour supporter un fil de noyau de silicium selon la revendication 1 ou 2, dans lequel
le corps principal de support est constitué d'un matériau ayant une résistance à la flexion de 10 MPa ou plus et une dureté shore de 20 ou plus.

7. Procédé de fabrication de silicium polycristallin en utilisant le support pour supporter un fil de noyau de silicium selon la revendication 1 ou 2, dans lequel
une feuille conductrice ayant une résistivité de 1.500 µΩ-cm ou moins est insérée entre les surfaces de contact du corps principal de support et du fil de noyau de silicium lorsque le fil de noyau de silicium doit être inséré dans le trou d'insertion de fil de noyau, de manière à réduire la résistance de contact entre les surfaces de contact du corps principal de support et du fil de noyau de silicium au moment de l'excitation du fil de noyau de silicium.
